# EUROPEAN PATENT APPLICATION

(11) **EP 1 544 013 A1**
(43) Date of publication of application: **22.06.2005**
(21) Application number: 03104790.5
(22) Date of filing: 18.12.2003
(51) Int. Cl.: B60J 7/12, B60J 7/185

(54) **Folding roof for a vehicle**

(71) Applicant: Inalfa Roof Systems Group B.V., 5804 AH Venray (NL)
(72) Inventor: Nellen, Marcel Johan Christiaan, 5803 CT, Venray (NL)
(74) Representative: Voncken, Bartholomeus Maria Christiaan

(57) **Abstract**

There is provided a folding roof for a vehicle, comprising a flexible cover for selectively closing or opening a roof opening provided in a stationary roof part of the vehicle, wherein a control beam is attached to the opening side of said cover, which at its lateral ends is guided in stationary guide rails that extend in the longitudinal direction of the vehicle along either side of said roof opening, further comprising drive means connected to said control beam for moving it in the guide rails for opening and closing the roof opening, and a transmission mechanism positioned between the drive means and the control beam for moving the control beam towards the closed position with increased driving force during the last part of the closing movement. At least during said last part of the closing movement of the control beam the transmission mechanism engages the control beam by means of a spring means.

## Description

The present invention relates to a folding roof for a vehicle comprising a flexible cover for selectively closing or opening a roof opening provided in a stationary roof part of the vehicle, wherein a control beam is attached to the opening side of said cover, which at its lateral ends is guided in stationary guide rails that extend in the longitudinal direction of the vehicle along either side of said roof opening, further comprising drive means connected to said control beam for moving it in the guide rails for opening and closing the roof opening, and a transmission mechanism positioned between the drive means and the control beam for moving the control beam towards the closed position with increased driving force during the last part of the closing movement.

Such a folding roof is known from European patent 1051307.

A folding roof of such a type experiences a large range of tolerances while closing, such that the closing pressure will differ among different folding roofs. A differing closing pressure means, that it is not sure whether the required seal pressure is realised. This effect is further negatively influenced by wind forces, especially when a folding roof is mounted having a large (admissible) play. On the other hand, when a folding roof having a small (admissible) play is mounted it is pushed into the seals with a large load, negatively influencing the seals and drive means and leading to an increased wear.

It is an object of the present invention to further improve such a folding roof.

Thus, in accordance with the present invention, there is provided a folding roof for a vehicle, comprising a flexible cover for selectively closing or opening a roof opening provided in a stationary roof part of the vehicle, wherein a control beam is attached to the opening side of said cover, which at its lateral ends is guided in stationary guide rails that extend in the longitudinal direction of the vehicle along either side of said roof opening, further comprising drive means connected to said control beam for moving it in the guide rails for opening and closing the roof opening, and a transmission mechanism positioned between the drive means and the control beam for moving the control beam towards the closed position with increased driving force during the last part of the closing movement, characterized in that at least during said last part of the closing movement of the control beam the transmission mechanism engages the control beam by means of a spring means.

The spring means will act as a load compensating means, such that, within certain tolerances, each folding roof can be closed while generating the same load.

Preferably, the transmission mechanism engages the control beam by means of a spring means during substantially the entire closing movement of the control beam (although, if needed, it also would be possible that the engagement between transmission mechanism and control beam by means of a spring means only occurs during said last part of the closing movement).

When the transmission mechanism engages the control beam by means of a spring means during substantionally the entire closing movement of the control beam, it further is preferred, that the spring constant of the spring means is such that during normal operation of the folding roof a deformation of the spring means only can occur during said last part of the closing movement of the control beam. This means, that during the stage of the closing movement before reaching said last part the engagement between the transmission mechanism and the control beam acts as if such an engagement would occur directly, without a spring means being positioned therebetween. Only during the last part of the closing movement, when an increased driving force is generated, the spring means will be deformed.

Many types of spring means can be used. Most preferably, the spring means is a leaf spring, because such a leaf spring only requires a short operating distance, thus limiting the dimensions of the respective parts of the folding roof.

For limiting the deformation of the spring means (for example in any extreme situations) a stop means could be provided (preferably on the control beam).

The folding roof according to the present invention may be of the type wherein the transmission mechanism is of the type comprising a triangular construction with a variable base, with a first leg pivotably connected to a drive slide and a second leg pivotably and movably connected to said drive slide under the control of a locking and releasing mechanism. In correspondence with the present invention then said first leg engages the control beam by means of said spring means.

Hereinafter the invention will be elucidated referring to the drawing, in which an embodiment of the folding roof according to the present invention is illustrated.
Figure 1 is a schematic plan view of an embodiment of the folding roof according to the present invention;
figure 2 shows, on a larger scale, a detail of the folding roof of figure 1 in a first position, and
figure 3 shows a detail as depicted in fig. 2, however in a different position.

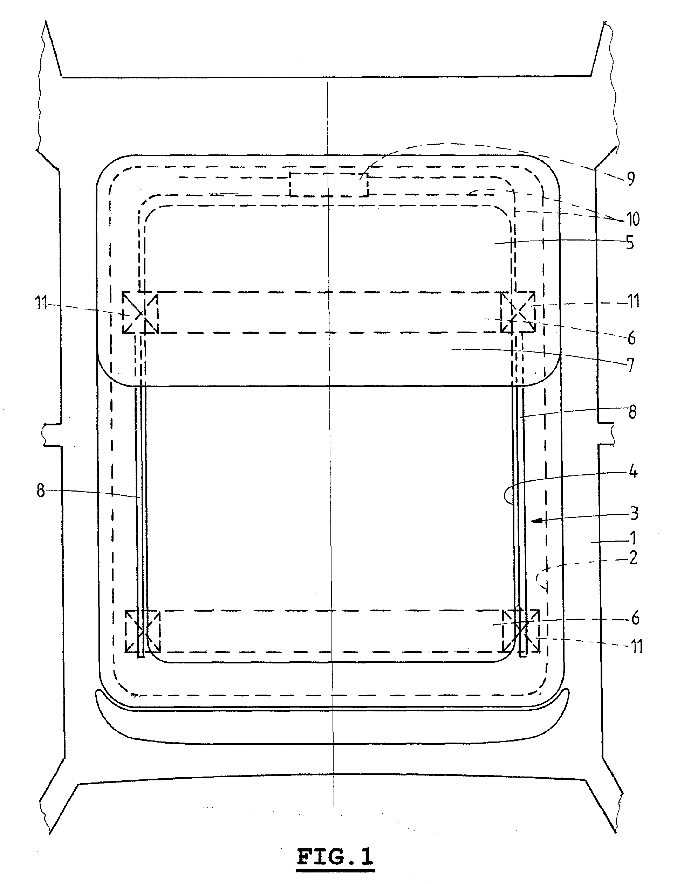

The drawing, and in first instance Fig. 1 thereof, shows a fixed roof 1 of a vehicle, in this case a passenger car, which is provided with an opening 2 for accommodating a folding roof. The folding roof comprises a frame 3, which supports parts of the folding roof and which is arranged for mounting the folding roof in the fixed roof 1. Frame 3 defines a passage opening 4, which can be selectively closed or at least partially opened by flexible cover 5. The construction of the flexible cover 5 and the means for folding up same when the roof is being opened basically belongs to the prior art and will not be explained in more detail herein.

In the present case, a control beam 6 for operating the folding roof is provided on the front side of the flexible cover 5, on which control beam a cover plate 7 is mounted, which is connected to flexible cover 5.

Control beam 6 is guided in guide rails 8 at its lateral ends, which guide rails extend along each side of passage opening 4 in the longitudinal direction of the vehicle (of course such guide rails also could be applied without a frame 3, as can be other means for guiding the control beam). Control beam 6 can be moved forward and backward by drive means comprising a driving element 9 in the form of a crank, an electric motor or the like, and connecting means 10 in the form of pressure-resistant driving cables or the like. Cables 10 drive control beam 6 directly during the larger part of the opening and closing movement. However, in order to be able to pull the flexible cover taut nicely in the closed position of the folding roof, a transmission mechanism 11 is provided between cables 10 and control beam 6, which transmission mechanism functions to pull control beam 6 with increased force to the closed and sealed position during the last part of the closing movement.

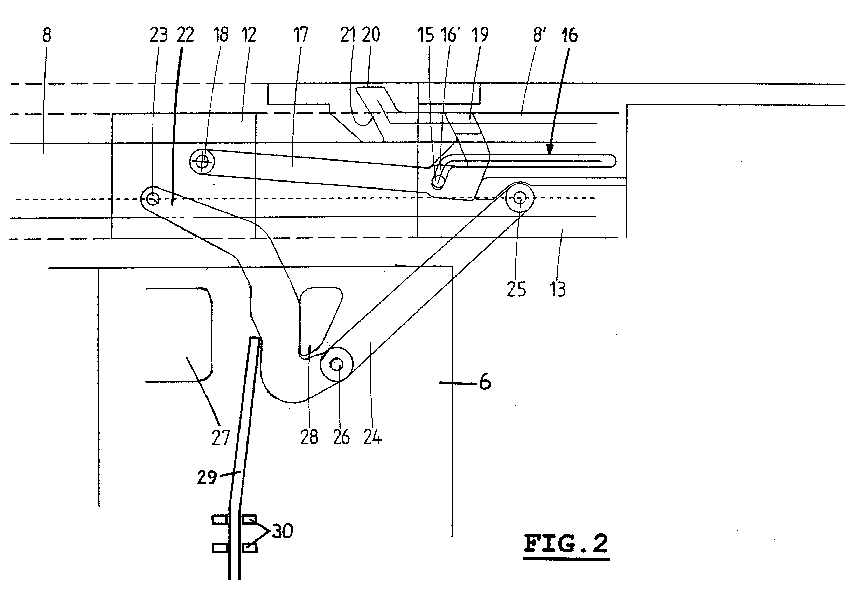

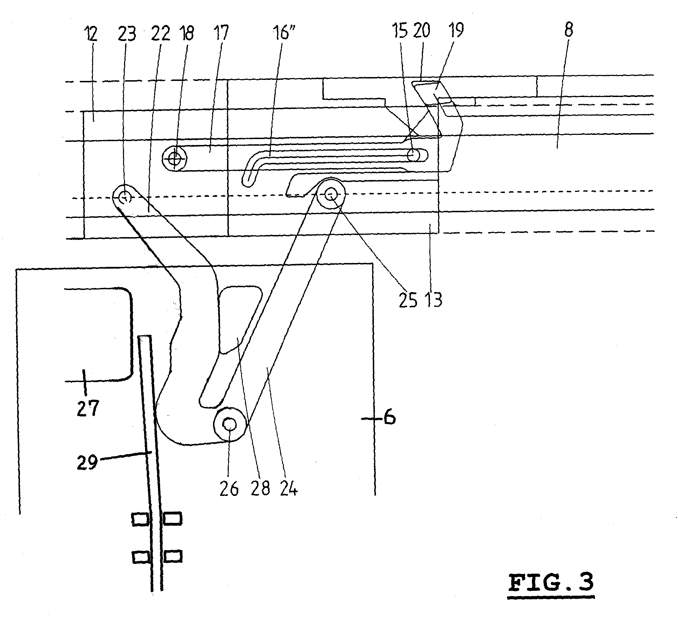

Figs. 2 and 3 show a possible embodiment of said transmission mechanism 11 and the parts that co-operate therewith. A lateral end portion of control beam 6 can be distinguished, which is supported, in a manner yet to be shown, in a driving slide 12 which is capable of reciprocating movement in guide rail 8 on the respective side of passage opening 4. A subslide 13 attached to the cables 10 cooperates with said driving slide 12. Driving slide 12 and subslide 13 are interconnected in such a manner that they move as a unit during the larger part of the closing (and opening) movement (Fig. 2), whilst driving slide 12 is locked with respect to guide rail 8 and subslide 13 moves with respect to driving slide 12 during the final part of the closing movement (Fig. 3) (and the first part of the opening movement), whereby subslide 13 drives the control beam 6 via transmission mechanism 11 during said movement relative to each other.

A locking element in the form of a pin 15 which engages in an oblique slot portion 16' of a slot 16 in subslide 13 is provided for the purpose of interconnecting slides 12 and 13 as a unit. Pin 15 is provided near the free ends of an arm 17 which is pivotally connected to driving slide 12 by means of a vertical pivot 18. While driving slide 12 and subslide 13 are fixedly interconnected, pin 15 is positioned at the end of the oblique slot portion 16'. Arm 17 is prevented from pivoting about pivot 18 by a cam or nose 19 provided on the free end of arm 17, which abuts against a flange 8' of guide rail 8. Thus, driving slide 12 and subslide 13 are rigidly interconnected in longitudinal direction in the position of fig. 2.

The locking engagement by locking element 15 can be released by means of the cam 19 that is present on the free end of arm 17, which cam 19 can enter into a cavity 20 formed in guide rail 8. Cam 19 is forced into cavity 20 by a catch element 21 projecting into the path of cam 19, which catches cam 19 and, because of its sloping position, guides said cam into cavity 20. Another effect of said sloping position is that the driving slide 12 which is connected to arm 17 is gradually stopped, because the cam 19 present on arm 17 continues to move forward slightly, and driving slide 12 will not come to a standstill until cam 19 fully engages in cavity 20, therefore. In this manner, the driving slide is prevented from slamming to a standstill.The lateral movement of arm 17 caused by cam 19 engaging into cavity 20 not only locks driving slide 12 in position with respect to guide rail 8, but also causes the locking engagement between driving slide 12 and subslide 13 to be released, since the pin 15 present on arm 17 moves from the oblique slot portion 16 into the slot portion 16' that extends in the longitudinal direction of guide rail 8, as a result of which subslide 13 can move relative to driving slide 12, due to the fact that pin 15 has moved into slot portion 16'. Arm 17 comprising cam 19 thus functions as a releasing element for locking element/pin 15, and also as a locking element for driving slide 12, and thus as a push-off element for transmission mechanism 11. That is, the engagement between cam 19 and cavity 20 makes it possible to transmit the required push-off force to guide rail 8 via cam 9, which enables the transmission mechanism to produce a speed-reducing and thus force-increasing effect.

The illustrated transmission mechanism 11 comprises a triangular construction with a first leg 22, which is pivotally connected to driving slide 12 by means of a vertical pivot 23, and a second leg 24, which is pivotally connected to subslide 13 by means of a vertical pivot 25. Legs 22 and 24 are pivoted together by means of a pivot 26 at their ends remote from pivots 23, 25. In this manner, a triangular construction having a variable base is formed, because vertical pivot 25 on subslide 13 is capable of movement with respect to pivot 23 on driving slide 12. Movement of subslide 13 with respect to driving slide 12 thus causes the triangle to change its form, to the effect that the angle between legs 22 and 24 will be changed and the top of the triangle will shift relative to the angular point formed by pivot 23.

The triangular construction of the transmission mechanism 11 is in driving engagement with control beam 6 in that first leg 22 is accommodated between upright walls 27 and 28 on control beam 6 such that the first leg 22 is positioned at some distance from upright wall 27 while engaging a spring means 29. The spring means 29, in the shown embodiment a leaf spring, is attached to the control beam 6 by mountings 30.

In the position shown in fig. 2, which occurs among others during the first part of closing the folding roof, the slides 12 and 13 are united and the triangular construction is in its initial position. Its leg 22 engages the spring means 29, but because during such a first part of the closing movement no large forces are needed to move the control beam 6 with flexible cover 5, the spring means 29 will not or hardly deform (of course, this depends on the choice of the spring constant of the spring means 29).

During the last part of the closing movement of the control beam 6 and flexible cover 5 (figure 3) driving slide 12 has been stopped and subslide 13 has been moved further. As a result, the triangular construction has assumed the position in fig. 3, while generating an increased force on the spring means 29. Depending on the tolerances in the folding roof the spring means 29 then will be deformed (as illustrated schematically in fig. 3) for compensating said tolerances.

Although under normal circumstances the triangular construction will not engage upright wall 27 of control beam 6, this upright wall 27 can act as a stop means under extreme conditions.

Although a folding roof embodiment has been illustrated using a triangular construction of the type as described in European patent 1051307, it is noted that the inventive principles also can be applied to a folding roof (or even a different type of open roof construction) using an other type of transmission mechanism positioned between the drive means and the control beam.

The invention is not limited to the embodiment described before which can be varied widely within the scope of the invention as defined by the appending claims.

## Claims

1. Folding roof for a vehicle, comprising a flexible cover for selectively closing or opening a roof opening provided in a stationary roof part of the vehicle, wherein a control beam is attached to the opening side of said cover, which at its lateral ends is guided in stationary guide rails that extend in the longitudinal direction of the vehicle along either side of said roof opening, further comprising drive means connected to said control beam for moving it in the guide rails for opening and closing the roof opening, and a transmission mechanism positioned between the drive means and the control beam for moving the control beam towards the closed position with increased driving force during the last part of the closing movement, **characterized in that** at least during said last part of the closing movement of the control beam the transmission mechanism engages the control beam by means of a spring means.

2. Folding roof according to claim 1, wherein the transmission mechanism engages the control beam by means of a spring means during substantially the entire closing movement of the control beam.

3. Folding roof according to claim 2, wherein the spring constant of the spring means is such that during normal operation of the folding roof a deformation of the spring means only can occur during said last part of the closing movement of the control beam.

4. Folding roof according to claim 2 or 3, wherein the spring means is a leaf spring.

5. Folding roof according to any of the previous claims, wherein the deformation of the spring means is limited by stop means.

6. Folding roof according to any of the previous claims, wherein the transmission mechanism is of the type comprising a triangular construction with a variable base, with a first leg pivotally connected to a drive slide and a second leg pivotally and movably connected to said drive slide under the control of a locking and releasing mechanism, and wherein said first leg engages the control beam by means of said spring means.
